# EUROPEAN PATENT APPLICATION

(11) **EP 2 026 061 A1**
(43) Date of publication of application: **18.02.2009**
(21) Application number: 08018010.2
(22) Date of filing: 22.06.2006
(51) Int. Cl.: G01N 21/952

(54) **Device for imaging a cylinder**

(30) Priority: 02.09.2005 JP 2005255410
(62) Divisional of application: 06012853.5
(71) Applicant: Otoko Machinery Works, Ltd., Chiba 276-0047 (JP)
(72) Inventor: Otoko, Masaaki, Ichikawa-shi, Chiba 272-0014 (JP); Shimooka, Makoto, Yachiyo-shi, Chiba 276-0047 (JP); Otoka, Toyoharu, Yachiyo-shi, Chiba 276-0047 (JP)
(74) Representative: Grünecker, Kinkeldey, Stockmair & Schwanhäusser Anwaltssozietät

(57) **Abstract**

A cylinder-imaging device for imaging a surfaces of a rotating cylinder is provided. The cylinder imaging device comprises supporting/rotating means operative to support the cylinder with the central axis thereof leveled and rotationally drive the cylinder by impinging on the outer circumference of the cylinder from below at both ends an imaging means operative to image a surface of the cylinder; an illuminator operative to illuminate the cylinder; and a drive controller operative to control imaging at the imaging means in synchronization with the rotation speed of the supporting/rotating means. The imaging means comprises a CCD line sensor camera capable of imaging over the length of the cylinder at a time. The CCD line sensor camera and the illuminator are located above the cylinder.

## Description

### CROSS REFERENCE TO RELATED APPLICATION

This application is based on and claims the benefit of priority from the prior Japanese Patent Application No. 2005-255410, filed on September 2, 2005, the entire contents of which are incorporated wherein by reference.

### BACKGROUND OF THE INVENTION

### Field of the Invention

The present invention relates to a cylinder-imaging device operative to image a surface of a cylinder and used in a system for defect inspection of the surface of the cylinder or advance inspection of out-of-color-registration. Such the cylinder may include a gravure cylinder for use in gravure printing, a mesh cylinder for use in flexo printing and a sleeve cylinder for use in offset printing.

### Description of the Related Art

In gravure printing, fine reentrant (cells) corresponding to an image are formed in a metallic cylinder to form a printing plate, and ink is filled in the cells and transferred onto a printed matter. A general gravure cylinder comprises a cylindrical iron core or aluminum core as a machine part. On a surface thereof, reentrant are formed using a diamond bite called stylus, then chromium-plated, and finally buffed to complete.

The gravure cylinder formed by the above manner is confirmed before sent to a print step whether or not a surface flaw is present. The flaw is confirmed as in JP-A 5-93694 (paragraph 0029-0044, Figs. 8-15) by irradiating the gravure cylinder surface with light and capturing the image on the gravure cylinder using a CCD camera.

The above-described conventional device for imaging the gravure cylinder is configured such that the axis of the gravure cylinder is supported on a certain shaft to rotate the gravure cylinder. As the gravure cylinder rotates, the CCD camera is moved in parallel with the axis of the gravure cylinder to image the surface of the gravure cylinder.

In the prior art, the gravure cylinder is rotated about the axis supportedon the shaft. Accordingly, the circumferential speed of the cylinder differs depending on the diameter of the gravure cylinders, and the timing of imaging can not be synchronized with the circumferential speed of the cylinder. Thus, the resolution of the captured cylinder image may be lowered possibly. In addition, as the gravure cylinder has a weight of about 200 kg, it is difficult to manually lift the gravure cylinder and install it on a certain shaft.

In the prior art, the quality of monochromic printing is confirmed by imaging each cylinder surface prior to printing by the cylinder. To the contrary, the quality of multicolor printing is confirmed only by actually depositing inks having different colors on respective cylinders and visually viewing a printed matter colored with the inks overlapped on a sheet of paper. Therefore, when a malfunction is found in the multicolor printed matter, it is required to stop the printing press, remove the cylinder, and reproduce the cylinder, with heavy loads imposed on the productivity and cost.

### SUMMARY OF THE INVENTION

The present invention has been made in consideration of such the problems. It has a first object to provide a cylinder-imaging device capable of retaining a constant circumferential speed of a cylinder regardless of the diameter of the cylinder, imaging a surface of the cylinder at a high resolution, and allowing the cylinder to be easily installed rotatable. It has a second object to provide a cylinder-imaging device, which allows the result from multicolor printing to be confirmed prior to visually viewing a printed matter colored with inks having different colors actually deposited on respective cylinders and then overlapped on a sheet of paper.

In one aspect the present invention provides a cylinder-imaging device for imaging a surface of a rotating cylinder, comprising: supporting/rotating means operative to support the cylinder with the central axis thereof leveled and rotationally drive the cylinder by impinging the outer circumference of the cylinder from below at both ends; an imaging means operative to image a surface of the cylinder; an illuminator operative to illuminate the cylinder; and a drive controller operative to control imaging at the imaging means in synchronization with the rotation speed of the supporting/rotating means; wherein the imaging means comprises a CCD line sensor camera capable of imaging over the length of the cylinder at a time, and the CCD line sensor camera and the illuminator are located above the cylinder.

The supporting/rotating means may comprise rollers arranged to support four points on the outer circumference of the cylinder from below at both ends.

The cylinder-imaging device may further comprise a drive mechanism operative to drive at least one of the supporting/rotating means.

Preferably, the cylinder-imaging device further comprises an imaging drive means arranged to keep a constant distance between the cylinder surface and the imaging means in accordance with the diameter of the cylinder.

Preferably, the cylinder-imaging device further comprises a case configured to house the supporting/ rotating means therein and having an aperture formed through an upper portion; a lid configured to house the imaging means and the illuminator therein and arranged open/close-able at the upper portion of the case; and a driver operative to make the case tilt-able.

### BRIEF DESCRIPTION OF THE DRAWING

Preferred embodiments of the present invention will now be described below with reference to the accompanying drawings, in which:
Fig. 1 is a brief perspective view of a cylinder-imaging device according to an embodiment of the present invention;
Fig. 2 is a partly enlarged perspective view of the cylinder-imaging device according to the embodiment of the present invention, which projects the inside of Fig. 1;
Fig. 3 briefly illustrates installation, imaging and removal of a cylinder in the cylinder-imaging device according to the embodiment of the present invention;
Fig. 4 is a functional block diagram of the cylinder-imaging device according to the embodiment of the present invention;
Fig. 5 is a flowchart illustrative of imaging and image editing in the cylinder-imaging device according to the embodiment of the present invention; and
Fig. 6 is a conceptual view illustrative of imaging and image editing in the cylinder-imaging device according to the embodiment of the present invention.

### DETAILED DESCRIPTION OF THE INVENTION

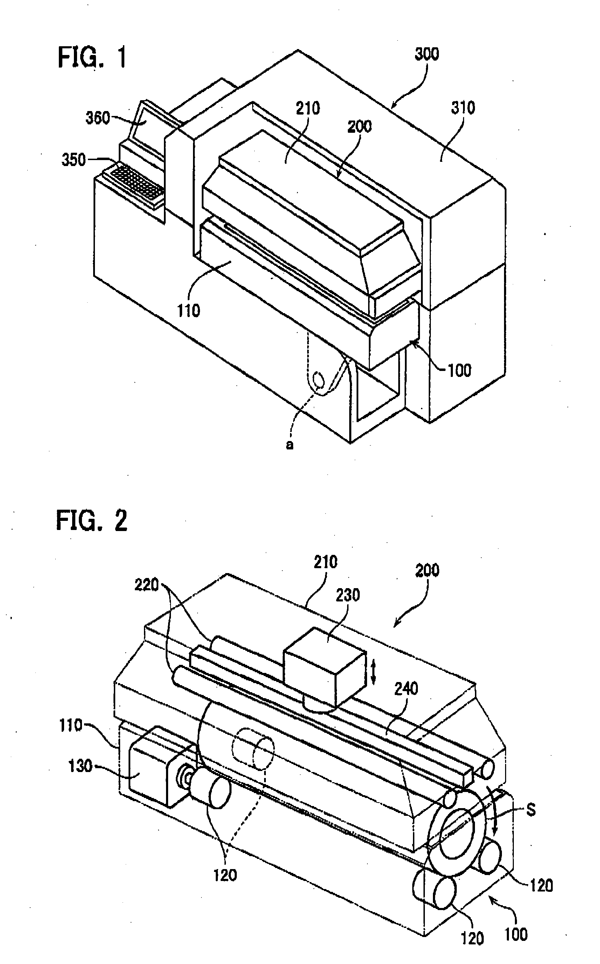

As shown in Fig. 1, a cylinder-imaging device comprises an installation unit 100 for receiving a cylinder S installed therein, an imaging unit 200 configured to move open/close-able above the installation unit 100, and a device body 300 arranged to support the installation unit 100 tilt-able.

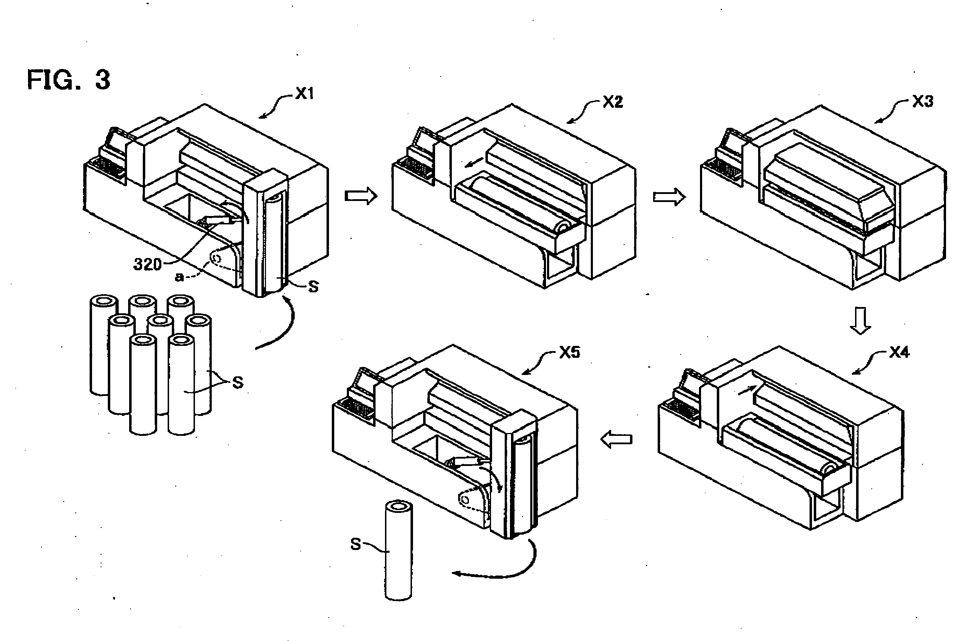

The installation unit 100 includes a case 110 configured in the form of a bottomed box having an aperture at an upper portion, four rollers 120 supported in the case 110 and capable of rotating, and a first driver 130 arranged to power the rollers 120. For example, the first driver 130 may comprise a pulse motor. The installation unit 100 is supported tilt-able about a pivot a relative to the device body 300 and configured tilt-able by an arm 320 (see Fig. 3) installed in the device body 300. The arm 320 has an end connected to the bottom of the case 110. The expandable operation of the arm 320 can tilt the case 110 within a range from the horizontal state to almost the vertical state. The rollers 120 are formed in the shape of rotatably pivoted rollers, which are arranged on the bottom of the case 110 in the length of the case 110 so as to have axis directions aligned with each other. The cylinder S impinges on the upper portions of these rollers 120 and mounts thereon. The first driver 130 rotates one of the rollers 120, and the empty weight of the cylinder S can rotate the remaining three rollers 120.

In the above structure, therefore, the four rollers 120 and the first driver 130 rotatably support the outer circumference of the cylinder S at both ends. Accordingly, it is possible to rotate the cylinder S always at a certain circumferential speed without changing the number of revolutions of the first driver 130 even if the diameter of the cylinder S differs in size. Supporting the outer circumference of the cylinder S at both ends prevents pattern-formed portions on the cylinder from damaging.

The imaging unit 200 includes a lid 210 in the form of a box, which is provided open/close-able relative to the case 110 and has an aperture facing the case 110. Two illuminators 220 are attached to an inner surface of the lid 210 to illuminate the cylinder S. A second driver 230 expandable in the vertical direction is arranged below the upper surface of the lid 210. Finally, a CCD camera 240 is attached below the second driver 230 to capture an image of the cylinder S. The CCD camera 240 is a CCD line sensor camera, which can scan over the length of the cylinder S at a time. The second driver 230 is movable in the vertical direction relative to the cylinder S and may be configured movable when a pulse motor drives it. If the CCD camera 240 and the illuminators 220 are provided beneath the cylinder S, a foreign matter attached to the surface of the cylinder S may drop possibly as the cylinder S rotates. Therefore, the CCD camera 240 and the illuminators 220 are located on the inner surface of the lid 210 above the cylinder S as shown in Fig. 2, that is, a clean position having a low possibility of receiving a foreign matter attached thereto.

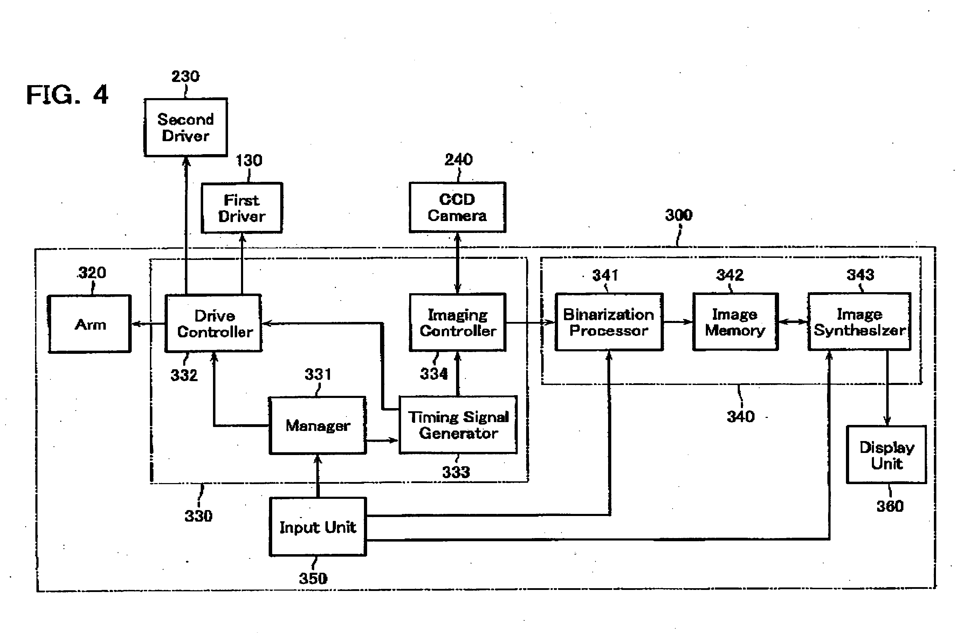

The device body 300 includes a base 310 provided to support the installation unit 100. An arm 320 (see Fig. 3) is configured to tilt the installation unit 100. A controller 330 (see Fig. 4) is provided to control driving the device and imaging. An image editor 340 (see Fig. 4) is provided to combine images obtained at the imaging unit 200. An input unit 350 such as a keyboard is provided to enter control commands into the controller 330. Finally, a display unit 360 such as a CRT is provided to display control information and image information.

Fig. 3 is referenced next to briefly describe installation, imaging and removal of the cylinder S in the cylinder-imaging device. First, as shown in the state X1 of Fig. 3, the case 110 is tilted at about 90 degrees toward the base 310, and the cylinder S is installed in the case 110. Next, based on the input from the input unit 350, the case 110 is returned to the state in parallel with the base 310 as shown in the states X2 and X3 of the same figure. Thereafter, the imaging unit 200 is slid out to side. The imaging unit 200 is then located above the installation unit 100 to image the cylinder S while the first driver 130 rotates the cylinder S via the rollers 120. After completion of imaging, the step transferring from the state X1 to the state X2 of the same figure is controlled in reverse as shown in the states X4 and X5 of the same figure, and the cylinder S is removed. Thus, the steps of installation, imaging and removal of one cylinder S is finished. If the printed image is multicolored, the above steps of installation, imaging and removal are repeated in accordance with the number of cylinders S.

Fig. 4 is referenced next to describe configurations of the controller 330 and the image editor 340 in the cylinder-imaging device. Fig. 4 is a functional block diagram of the cylinder-imaging device according to the embodiment of the present invention.

In the controller 330, a manager 331 is supplied with information about the initial condition of inspection from the input unit 350. The initial condition may include a cylinder length and a cylinder diameter. A drive controller 332 is operative to control the drive speed of the first driver 130. Alternatively, it is operative to control the drive in relation to a timing signal generator 333 that sends a timing signal for determining the timing of tha CCD camera 240 to image. Namely, in synchronization with sending to the drive controller 332, the timing signal generator 333 sends a single also to an imaging controller 334, in addition to the drive controller 332, to synchronize the capture timing of the CCD camera 240 with the rotation of the cylinder S. The drive controller 332 can drive based on a control signal from the manager 331. It drives the second driver 230 in accordance with the diameter of the cylinder S input from the input unit 350 to keep a constant distance between the cylinder S and the CCD camera 240. Similarly, the drive controller 332 drives the arm 320 and tilts the case 110 based on a control signal from the manager 331.

In the image editor 340, a binarization professor 341 is operative to binarize a plane image of the cylinder S captured at the CCD camera 240 and store it in an image memory 342. An image synthesizer 343 is operative to execute processing for reading out the plane image stored in the image memory 342, coloring dots in the image with a monochrome corresponding to the color of ink deposited on the imaged cylinder S, and superimposing plural colored monochromic cylinder images together. The above-described binarization level, the colors applied to the cylinder images are implemented based on the input to the input unit 350.

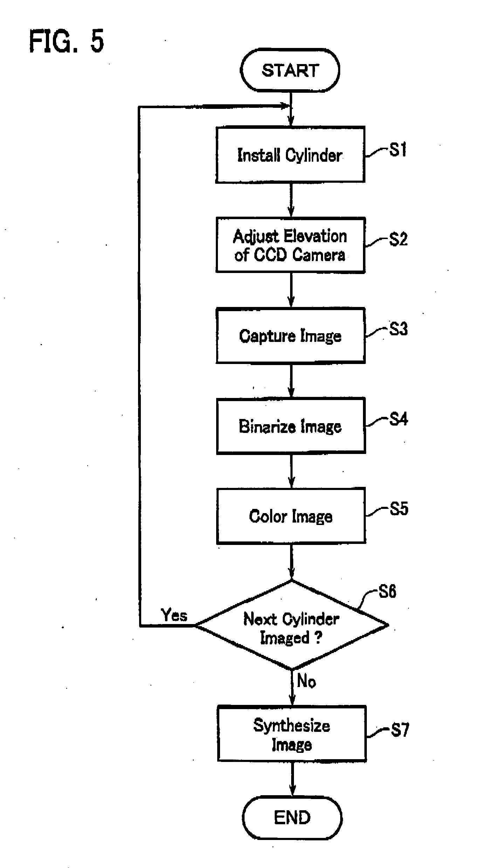

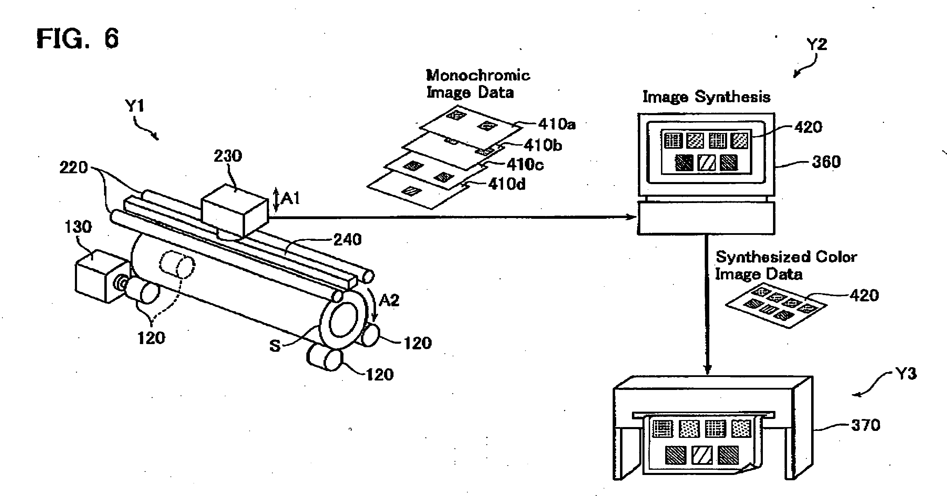

Figs. 5 and 6 are referenced next to describe imaging and editing captured images in the cylinder-imaging device according to the embodiment of the present invention. Fig. 5 is a flowchart showing imaging and image editing in the cylinder-imaging device according to the embodiment of the present invention, and Fig. 6 is an overview showing the imaging and image editing.

First, as shown in the states X1-X3 of Fig. 3, the cylinder S is installed in the installation unit 100 and covered with the imaging unit 200 from above such that it can be imaged (S1). After completion of the step S1, the second driver 230 is driven to move the CCD camera 240 and the illuminators 220 relative to the cylinder S as shown in the step Y1 of Fig. 6 in the vertical direction (the reference symbol A1 in the step Y1 of Fig. 6), for example, to a distance that maximizes the resolution of the CCD camera 240 (S2). After adjustment of elevation, the first driver 130 rotates the roller 120 and thus rotates the cylinder S (the reference symbol A2 in the step Y1 of Fig. 6). The timing signal generator 333 then adjusts the timing for imaging in relation to the rotation speed of the first driver 110, and the CCD camera 240 images the surface of the cylinder S (S3). The imaged surface of the cylinder S is binarized at the binarization processor 341 (S4), and the binarized image is colored with a monochrome corresponding to the cylinder S and stored in the image memory 342 (S5). After completion of the steps S1-S5, the input unit 350 is used to select an option from "Yes" and "No" for an inquiry "Whether Next Cylinder is Imaged?" displayed on the display unit 360 (S6). If the option "Yes" is selected (S6, Yes), the cylinder S is extracted as shown in the states X4 and X5 of Fig. 3, followed by repeating the steps S1-S6.

The image processing steps S4 and S5 are executed to all the captured images, and the pieces of monochromic image data of plural cylinders S are stored in the image memory 342. In the step S6, if the option "No" is selected (S6, No), the pieces 410a-410d of monochromic image data of plural cylinders S are superimposed together as shown in the step Y2 of Fig. 6 at the image synthesizer 343 and stored in the image memory 342 as synthesized color image data 420 of, for example, CMYK TIFF (S7). The synthesized color image data 420 is displayed on the display unit 360. The synthesized color image data 420 may also be fed from the image synthesizer 343 to the printer 370 to provide an output on a paper medium or the like as shown in the step Y3 of Fig. 6.

The embodiments of the invention have been described above though the present invention is not limited to these embodiments. Rather, various alternatives, additions and replacements can be achieved without departing from the scope of the invention. For example, the roller 120 driven from the first driver 130 is not limited to one but may be two or more. In addition, the rollers 120 are not limited to four but may be more than four.

## Claims

1. A cylinder-imaging device for imaging a surface of a rotating cylinder (S), comprising:
supporting/rotating means (120) operative to support the cylinder (S) with the central axis thereof leveled and rotationally drive the cylinder (S) by impinging the outer circumference of the cylinder (S) from below at both ends;
an imaging means (240) operative to image a surface of the cylinder (S);
an illuminator (220) operative to illuminate the cylinder (S); and
a drive controller (332) operative to control imaging at the imaging means (240) in synchronization with the rotation speed of the supporting/rotating means (120); wherein
the imaging means (240) comprises a CCD line sensor camera (240) capable of imaging over the length of the cylinder (S) at a time, and
the CCD line sensor camera (240) and the illuminator (220) are located above the cylinder (S).

2. The cylinder-imaging device according to claim 1,
wherein the supporting/rotating means (120) comprises rollers (120) arranged to support four points on the outer circumference of the cylinder (S) from below at both ends.

3. The cylinder-imaging device according to claim 1, further comprising a drive mechanism (130) operative to drive at least one of the supporting/rotating means (120).

4. The cylindex-imaging device according to claim 1, further comprising an imaging drive means (230) arranged to keep a constant distance between the cylinder surface and the imaging means (240) in accordance with the diameter of the cylinder (S).

5. The cylinder-imaging device according to claim 1, further comprising:
an case (110) configured to house the supporting/rotating means (120) therein and having an aperture formed through an upper portion;
a lid (210) configured to house the imaging means (240) and the illuminator (220) therein and arranged open/close-able at the upper portion of the case (110); and
a driver operative (320) to make the case (110) tilt-able.
